# EUROPEAN PATENT SPECIFICATION

(11) **EP 1 804 373 B1**
(45) Date of publication and mention of the grant of the patent: **14.04.2010**
(21) Application number: 06127016.1
(22) Date of filing: 22.12.2006
(51) Int. Cl.: H02P 9/02, H02P 25/18, F02N 11/04, H02K 3/28

(54) **Rotary electric machine system**
Rotierende elektrische Maschine
Système de machine électrique rotative

(30) Priority: 28.12.2005 JP 2005379052
(43) Date of publication of application: 04.07.2007
(73) Proprietor: HONDA MOTOR CO., LTD., Tokyo (JP)
(72) Inventor: Yanagisawa, Takeshi, Saitama 351-0193 (JP); Nakajima, Hiroyuki, Saitama 351-0193 (JP)
(74) Representative: Quinterno, Giuseppe

(56) References cited:
- WO-A-03/034573
- DE-A1- 19 829 442

## Description

This invention relates to a rotary electric machine system used for such an application as a vehicle-carried system, and particularly to a rotary electric machine system suitable for use both as a starter and a generator, of the kind defined in the preamble of claim 1.

A rotary electric machine system of this kind is disclosed in WO 03/034573 A.

It is an object of the present invention to provide a rotary electric machine system of a simple and convenient configuration which is changed over such that the driving force when it is used as a motor and the power generation amount when it is used as a generator may individually be appropriate.

This object is achieved according to the invention by a rotary electric machine system according to claim 1.

In a rotary electric machine system according to the invention the wire connection section has three phases; the relay includes a first switch section and a second switch section; the other end of a predetermined number of the coils of the first phase of the wire connection section is connected to one of contacts of the first switch section and the second switch section; the other end of the predetermined number of the coils of the second phase of the wire connection section is connected to the other contact of the first switch section; and the other end of the predetermined number of the coils of the third phase of the wire connection section is connected to the other contact of the second switch section.

The rotary electric machine system has a further characteristic that the control section operates the first switch section and the second switch section so as to perform short-circuiting and disconnection actions in synchronism with each other. The rotary electric machine system has a still further characteristic that the control section measures voltages at the other ends of the coils connected to the relay and outputs a predetermined alarm signal based on a potential difference.

According to the present invention, since the first switch section and the second switch section perform opening and closing operations, a switch section of the two contact type having versatility can be used.

According to the further characteristic of the present invention, since synchronism is established, the control procedure can be simplified and made convenient, and changeover between effective and ineffective states of the coils of the wire connection section can be carried out with certainty.

According to the still further characteristic of the present invention, the operator can perform a predetermined countermeasure process in response to the alarming signal.

Further characteristics and advantages of the present invention will become apparent from the description which follows by way of non-limiting example with reference to the accompanying drawings wherein:
FIG. 1 is a side elevational view of a motorcycle,
FIG. 2 is a sectional plane view of a swing unit,
FIG. 3 is a partially enlarged sectional plan view of the swing unit,
FIG. 4 is a block diagram of an electric circuit of the motorcycle,
FIG. 5 is a block diagram of a rotory electric system,
FIG. 6 is a flow chart illustrating an action procedure of a rotory electric machine system,
FIG. 7 is a view showing a relay and a connection scheme of the relay according to a first embodiment of the present invention, and
FIG. 8 is a view showing a relay and a connection scheme of the relay according to a second embodiment of the present invention.

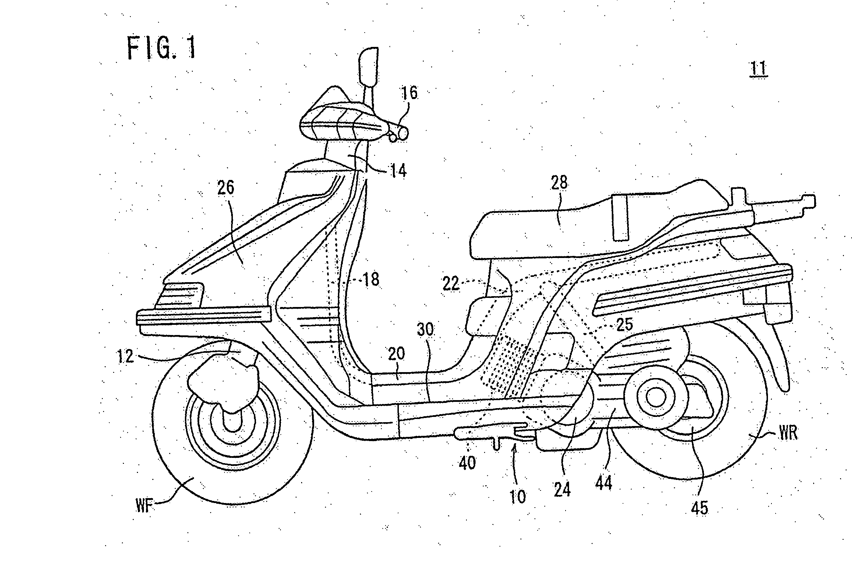

In the following, an embodiment of a rotary electric machine system according to the present invention is described with reference to FIG. 1 to FIG. 8 of the accompanying drawings. The rotary electric machine system 10 according to the present embodiment is carried on a vehicle 11 shown in FIG. 1.

As shown in FIG. 1, the vehicle 11 is a scooter type motorcycle and includes a front fork 12 for supporting a front wheel WF for rotation at a front portion of the vehicle body, and the front fork 12 is steered by an operation of a handle bar 16 through a head pipe 14. A right grip portion of the handle bar 16 serves as a rotatable accelerator.

A down pipe 18 is attached to the head pipe 14 such that it extends rearwardly and downwardly, and an intermediate frame 20 extends substantially horizontally at a lower end of the down pipe 18. A rear frame 22 is provided at a rear end of the intermediate frame 20 such that it extends rearwardly and upwardly.

Part of a swing unit 24 including a power source is connected to a rear end portion of the intermediate frame 20. A rear wheel WR which is a driving wheel is attached for rotation to the rear end portion side of the swing unit 24, and the swing unit 24 is suspended by a rear suspension 25 attached to the rear frame 22.

An outer periphery of the down pipe 18, intermediate frame 20 and rear section frame 22 is covered with a vehicle body cover 26, and a seat 28 to be seated by a driver is fixed to a rear upper portion of the vehicle body cover 26. A step floor 30 for receiving the feet of the driver placed thereon is provided at an upper portion of the intermediate frame 20 between the seat 28 and down pipe 18.

The vehicle 11 includes an engine automatic stopping and starting (stop and go) function for automatically stopping an engine 40 upon stopping and for automatically driving, if such a starting operation that a throttle grip is operated for opening or a starter switch is operated into an on state is performed, a starter motor to re-start the engine.

The engine 40 of the single-cylinder four-cycle type is mounted at a front portion of the swing unit 24. A belt type variable speed transmission 44 is configured so as to extend rearwardly from the engine 40, and the rear wheel RW is supported for rotation on the belt type variable speed transmission 44 by a reduction gear 45 provided at a rear portion of the belt type variable speed transmission 44 through a centrifugal clutch. A rear suspension 25 is interposed between an upper end of the reduction gear 45 and an upper curved portion of the rear frame 22. A carburetor connected to an intake pipe extending from the engine 40 and an air cleaner connected to the carburetor are disposed at a front portion of the swing unit 24.

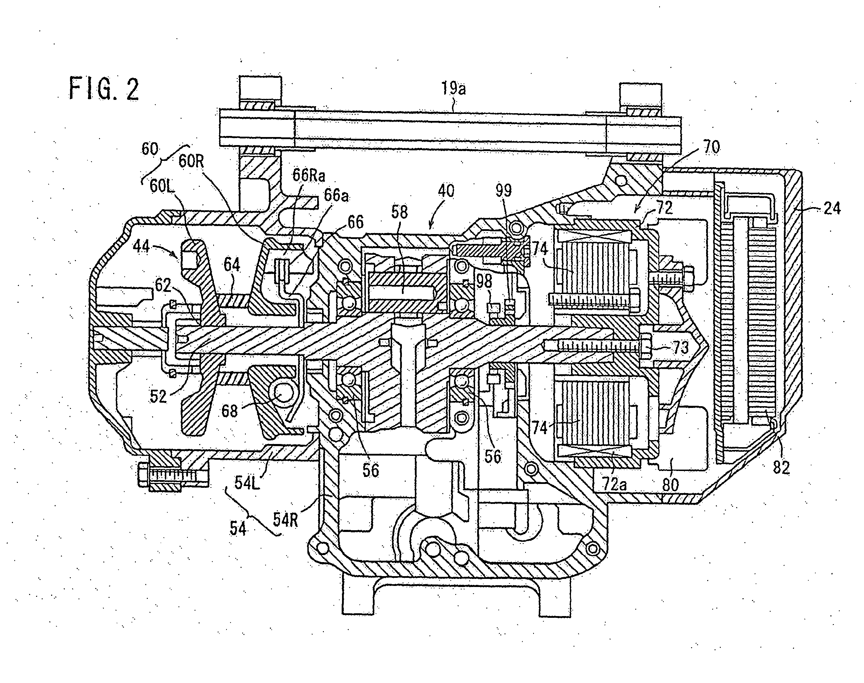

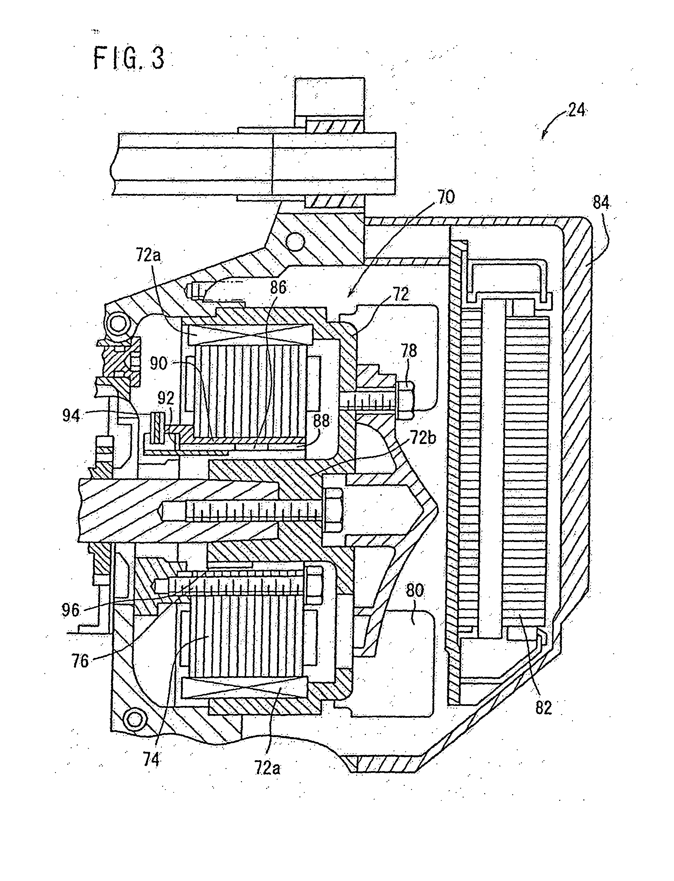

FIG. 2 is a sectional view showing the swing unit 24 taken along the crankshaft 52, and FIG. 3 is an enlarged partial sectional top plan view of the swing unit 24. In FIGS. 2 and 3, like elements to those described hereinabove are denoted by same or like reference characters.

The swing unit 24 is connected and supported for rocking motion to a hanger bracket 19a through a predetermined link member. The swing unit 24 is covered with a crankcase 54 formed by integrating left and right crankcases 54L and 54R, and the crankshaft 52 is supported for rotation by a bearing 56 fixed to the right crankcase 54R. A connecting rod (not shown) is connected to the crankshaft 52 through a crankpin 58.

The left crankcase 54L serves also as a belt type variable speed transmission case, and a belt driving pulley 60 is provided for rotation on the crankshaft 52 which extends to the left crankcase 54L. The belt driving pulley 60 is formed from a fixed side pulley half 60L and a movable side pulley half 60R. The fixed side pulley body 60L is fixed to a left end portion of the crankshaft 52 through a boss 62, and the movable side pulley body 60R is spline fitted with the crankshaft 52 on the right side of the fixed side pulley body 60L for movement toward and away from the fixed side pulley half 60L. A V belt 64 extends between and around the pulley halves 60L and 60R.

A cam plate 66 is fixed to the crankshaft 52 on the right side of the movable side pulley half 60R. A sliding piece 66a provided at an outer peripheral end of the cam plate 66 is engaged for sliding motion with a cam plate sliding boss portion 60Ra formed in an axial direction at an outer peripheral end of the movable side pulley half 60R. The cam plate 66 has a tapering face inclined at a portion thereof rather near to the outer periphery toward the cam plate 66 side, and a dry weight ball 68 is accommodated in a space between the tapering face and the movable side pulley half 60R.

If the speed of rotation of the crankshaft 52 increases, then the dry weight ball 68 held between the movable side pulley half 60R and cam plate 66 and rotated together with the crankshaft 52 is moved in a centrifugal direction by centrifugal force. Thereupon, the movable side pulley half 60R is pressed by the dry weight ball 68 to move in a leftward direction toward the fixed side pulley half 60L. As a result, the V belt 64 sandwiched between the pulley halves 60L and 60R moves in a centrifugal direction and the wrapping diameter thereof increases.

A driven pulley (not shown) corresponding to the belt driving pulley 60 is provided at a rear portion of the vehicle, and the V belt 64 is wrapped around the driving pulley. By this belt transmission mechanism, the power of the engine 40 is automatically adjusted and transmitted to the centrifugal crutch to drive the rear wheel RW through the reduction gear 45 and so forth.

An ACG starter (rotary electric machine) 70 formed by combining a starter motor and an AC generator is disposed in the right crankcase 54R. The ACG starter 70 is a rotary electric machine including a stator 74 provided so as to surround an end portion of the crankshaft 52 and an outer rotor 72 provided so as to surround the stator 74. The stator 74 is fixed to the crankcase 54, and the outer rotor 72 is fixed to a tapering portion at an end portion of the crankshaft 52.

A plurality of magnets 72a are provided in an equally spaced relationship on an inner periphery of the outer rotor 72 and are rotated by magnet force generated by the stator 74, and the ACG starter 70 acts as a starter motor. Further, the outer rotor 72 can be rotated together with the crankshaft 52 so as to apply variable magnetic fluxes to the stator 74 thereby to generate electric power, and the ACG starter 70 acts as an AC generator.

A fan 80 fixed by a bolt is provided on the outer rotor 72. A radiator 82 is provided adjacent the fan 80 and covered with a fan cover 84.

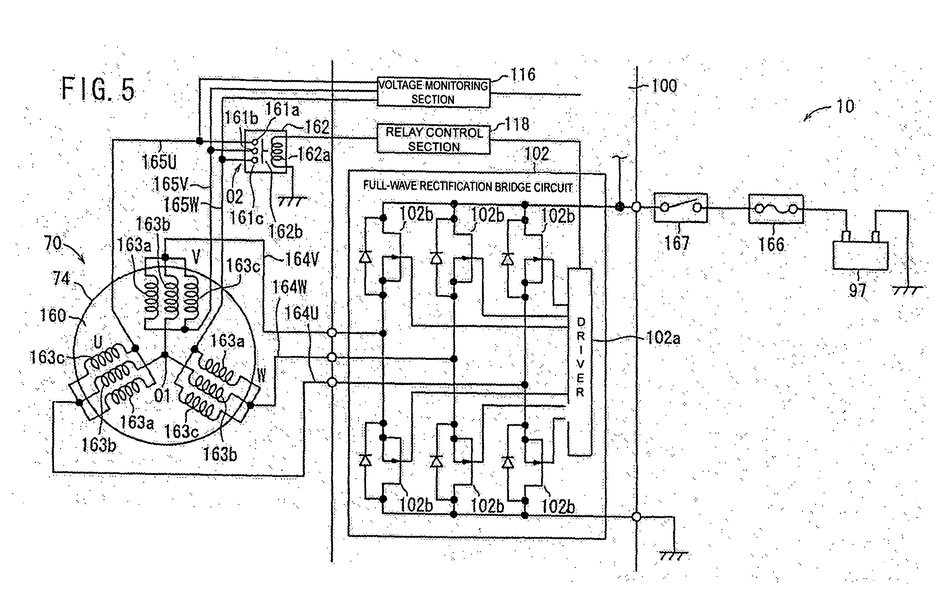

As shown in an enlarged scale in FIG. 3, a sensor case 86 is fitted in an inner periphery of the stator 74. In the sensor case 86, a rotor angle sensor (magnetic pole sensor) 88 and a pulser sensor (ignition pulser) 90 are provided in an equally spaced relationship along an outer periphery of the boss 72b of the outer rotor 72. The rotor angle sensor 88 is an element for performing energization control of stator coils 163a to 163c (Figure 5) of the ACG starter 70 and is provided one by one for a U phase, a V phase and a W phase of the ACG starter 70. The ignition pulser 90 is for ignition control of the engine, and only one ignition pulser 90 is provided. Both of the rotor angle sensor 88 and the ignition pulser 90 can be formed from a hole IC or a magnetic resistance (MR) device.

Leads of the rotor angle sensor 88 and the ignition pulser 90 are connected to a board 92, and a wire harness 94 is coupled to the board 92. A two-stage magnetized magnet ring 96 is fitted on the outer periphery of the boss 72b of the outer rotor 72 so that it provides magnetic action on the rotor angle sensor 88 and the ignition pulser 90.

On one of magnetized bands of the magnet ring 96 corresponding to the rotor angle sensor 88, N poles and S poles arranged alternately in a spaced relationship by a 30° width from each other in a circumferential direction are formed corresponding to magnetic poles of the stator 74. On the other magnetized band of the magnet ring 96 corresponding to the ignition pulser 90, a magnetized portion is formed in a range of 15° or 40° at one place in a circumferential direction.

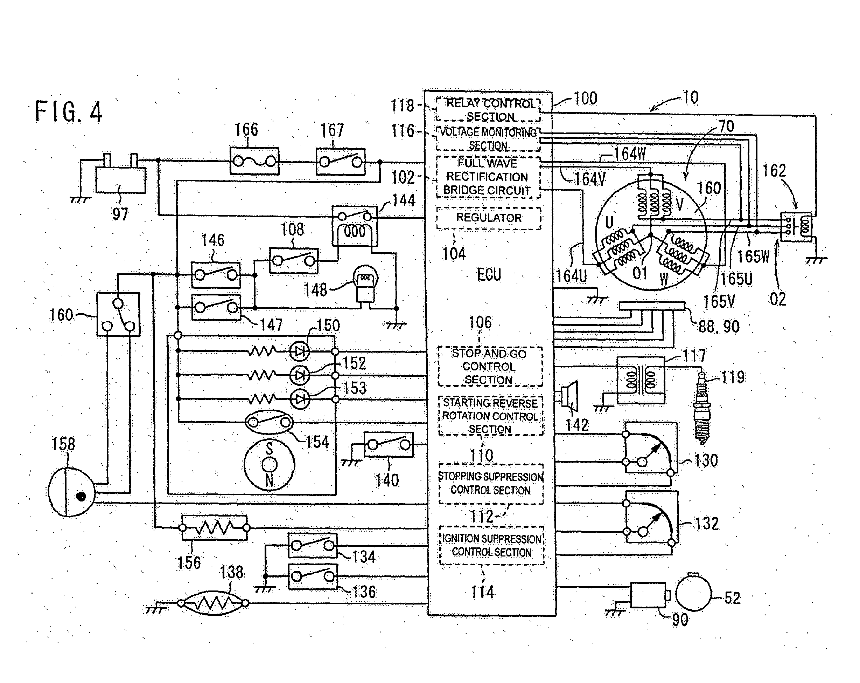

The ACG starter 70 functions as a starter motor (synchronous motor) upon engine starting, and is driven by current supplied thereto from a battery (charging section, refer to FIG. 4) 97 so that the crankshaft 52 is rotated to start the engine 40. The ACG starter 70 functions as a synchronous generator after the engine is started, and charges generated current into the battery 97 and supplies the current to electric equipment sections.

Referring back to FIG. 2, a sprocket wheel 98 is fixed to the crankshaft 52 between the ACG starter 70 and the bearing 56, and a chain for driving a camshaft (not shown) from the crankshaft 52 is wrapped on the sprocket wheel 98. It is to be noted that the sprocket wheel 98 is formed integrally with a gear 99 for transmitting power to a pump for circulating lubrication oil.

As shown in FIG. 4, an ECU 100 includes a full-wave rectification bridge circuit 102 for full-wave rectifying three-phase alternating current generated by the ACG starter 70, a regulator 104 for restricting an output of the full-wave rectification bridge circuit 102 to a predetermined regulated voltage (for example, 14.5 V), and a stop and go control section 106 for automatically stopping the engine when the vehicle stops and automatically re-starting the engine when a predetermined starting condition is satisfied. Further, the ECU 100 includes a starting reverse rotation control section 110 for reversely rotating the crankshaft 52 to a predetermined position upon engine starting by a starter switch 108, a stopping reverse rotation control section 112 for reversely rotating the crankshaft 52 to a predetermined position after the engine is automatically stopped by stop and go control, an ignition suppression control section 114, a voltage monitoring section 116 for monitoring the voltage at neutral point forming lines 165U to 165W, and a relay control section 118 for performing opening and closing actions through an operation section 162a of a relay 162. The relay control section 118 drives, when the outer rotor 72 and crankshaft 52 are to be rotated, a switch section 162b of the relay 162 through the operation section 162a to short-circuit contacts 161a, 161b and 161c. On the other hand, when power generation is to be performed by rotation of the crankshaft 52, the relay control section 118 disconnects the contacts 161a, 161b and 161c of the switch section 162b. The ignition suppression control section 114 has a function of causing misfiring by a predetermined number of times at an ignition timing upon starting of the engine 40 and another function of limiting the rotating speed N of the engine 40 to a predetermined value.

The full-wave rectification bridge circuit 102 is a bridge circuit including a driver 102a and six semiconductor switching devices 102b for performing opening and closing operation under the action of the driver 102a. With the full-wave rectification bridge circuit 102, the power generated by the wire connection section 160 can be converted into direct current and supplied to a predetermined load or charged into the battery 97, and the outer rotor 72 and the crankshaft 52 can be rotated by converting the power of the battery 97 into alternating current and supplying the alternating current to the wire connection section 160. As the semiconductor switching device 102b, for example, an FET (Field Effect Transistor), an IGBT (Insulated Gate Bipolar Transistor), a thyristor or the like is listed.

An ignition coil 117 (figure 4) is connected to the ECU 100, and an ignition plug 119 is connected to the secondary side of the ignition coil 117. Further, a throttle sensor 130, a fuel sensor 132, a seat switch 134, an idle switch 136, a cooling water temperature sensor 138, a throttle switch 140, an alarm buzzer 142, the rotor angle sensor 88 and the ignition pulser 90 are connected to the ECU 100. Thus, detection signals are inputted from them to the ECU 100.

Further, a starter relay 144, the starter switch 108, a front wheel stop switch 146, a rear wheel stop switch 147, a standby indicator 150, a fuel indicator 152, an alarm indicator 153, a speed sensor 154, a resistor 156, and a headlamp 158 are connected to the ECU 100. A dimmer switch 159 is provided for the headlamp 158. Further, a terminal of the stator coil of the ACG starter 70 is connected to the relay 162. A stop lamp 148 is connected so as to be turned on when at least one of the front wheel stop switch 146 and the rear wheel stop switch 147 is switched on. Power is supplied from the battery 97 to the ECU 100 through a main fuse 166 and a main switch 167. Further, when the engine 40 is to be started, the power is supplied to the full-wave rectification bridge circuit 102 through the starter relay 144 in response to an operation of the starter switch 108.

As shown in FIGS. 4 and 5, the rotary electric machine system 10 includes the ECU 100, ACG starter 70, and relay 162. As described above, the ACG starter 70 includes the outer rotor 72 and stator 74.

The relay 162 includes the operation section 162a which is excited by energization and the switch section 162b whose contacts are opened or closed by the operation section 162a. The switching section 162b has the contacts 161a, 161b and 161c, which are short-circuited to each other when the operation section 162a is excited by energization but are disconnected from each other when the operation section 162a is not excited so that they are isolated from each other. In particular, the relay 162 is of the normally open type.

The stator 74 has the wire connection section 160 of the three-phase Y-connection type. The wire connection section 160 includes three stator coils 163a, 163b and 163c for each of the U, V and W phases, and each of the stator coils 163a, 163b and 163c of each phase is connected at one end thereof as inputting and outputting sections 164U, 164V or 164W. (The suffices U, V and W indicate corresponding phases. This similarly applies to the following description.) The inputting and outputting sections 164U to 164W are connected to the full-wave rectification bridge circuit 102.

The stator coils 163b of the phases are connected at the other end thereof to each other and form a first neutral point O1. The stator coils 163a and 163c of the U phase are connected at the other end thereof to each other to form the neutral point forming line 165U and connected to the contact 161a of the relay 162. The stator coils 163a and 163c of the V phase are connected at the other end thereof to each other to form the neutral point forming line 165V and connected to the contact 161b of the relay 162. The stator coils 163a and 163c of the W phase are connected at the other end thereof to each other to form the neutral point forming line 165W and connected to the contact 161c of the relay 162.

Further, the neutral point forming lines 165U to 165W are connected also to the voltage monitoring section 116. The voltage monitoring section 116 measures the voltages of the neutral point forming lines 165U to 165W and outputs a predetermined alarm signal when the relay 162 is off and the AC potential difference becomes lower than a predetermined threshold value (for example, approximately 5 V).

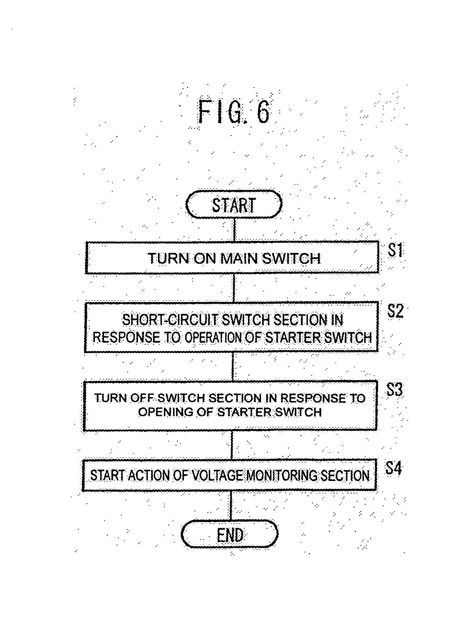

Now, action of the rotary electric machine system 10 of the vehicle 11 having the configuration described above is described with reference to FIG. 6.

First at step S1, when the vehicle 11 is to be driven, the driver would turn on the main switch 167 to start the ECU 100. In this initial state, the relay control section 118 keeps the relay 162 in a non-excited state, and the contacts of the contact 161b are open.

At step S2, the driver would operate the starter switch 108 to start the engine 40. At this time, the relay control section 118 detects a signal in response to the operation of the starter switch 108 to excite the operation section 162a of the relay 162 to short-circuit the contacts of the switch section 162b. Consequently, the other ends of the stator coils 163a and 163b of the individual phases are connected to each other thereby to form a neutral point of the Y connection. In the following description, the neutral point is identified as second neutral point 02 from the first neutral point O1.

Meanwhile, the driver 102a of the full-wave rectification bridge circuit 102 receives power from the starter relay 144 which operates in response to the operation of the starter switch 108 and controls the semiconductor switching devices 102b between open and closed states to reform the power into and supplies AC power to the wire connection section 160. Consequently, the ACG starter 70 can act as a starter motor to rotate the crankshaft 52.

At this time, since the second neutral point 02 is formed, the stator coils 163a to 163c of the U to W phases are placed into a configuration wherein they are connected substantially in parallel to each other. Consequently, torque approximately equal to three times that generated by a Y connection in a state wherein the stator coils 163b are connected to each other only at the first neutral point O1 can be generated. Since the ACG starter 70 can generate high torque in this manner, the crankshaft 52 can be rotated directly without intervention of a reduction gear.

As the crankshaft 52 rotates, a spark is generated from the ignition plug 119 at a predetermined ignition timing based on a signal of the pulser sensor 90. Vaporized fuel in the combustion chamber is expanded by ignition and drives the crankshaft 52 through the connecting rod to start the engine 40.

At step S3, the driver would recognize it from engine sound, the tachometer and so forth that the engine 40 is started, and open the starter switch 108. The relay control section 118 detects that the starter switch 108 is opened, and places the operation section 162a of the relay 162 into a non-exited state to open the switch section 162b. Consequently, the second neutral point 02 disappears and the stator coils 163a and 163c are denergized while the first neutral point O1 remains and the stator coils 163b effectively keep the Y connection. It is to be noted that the opening and closing timings of the relay 162 need not necessarily be synchronized with the starter switch 108 only if they are timed with the starting of the engine 40, and for example, the relay 162 may be opened when it is detected by suitable means that the engine 40 is placed into a full explosion state.

Since the relay 162 is of the normal open type and is excited basically only when the engine 40 is started, the period of time within which the relay 162 is energized with exciting current is short, and the power consumed by the relay 162 is very low.

The driver 102a of the full-wave rectification bridge circuit 102 detects that the starter switch 108 is opened, and controls the semiconductor switching devices 102b to change over the energization direction of current so that alternating power generated by the stator coils 163b by rotation of the crankshaft 52 and the outer rotor 72 is converted into DC power. The DC power is supplied to a load and is charged into the battery 97 through the main switch 167 and the fuse 166.

In this manner, upon power generation by the ACG starter 70 (in short, except when the engine 40 is started), since the stator coils 163a and 163c of the wire connection section 160 are ineffective and only the stator coils 163b generate power, the power generation amount is suppressed and the battery 97 is not overcharged.

At step S4, the voltage monitoring section 116 starts its action under the condition that the engine 40 is started to open the relay 162. The voltage monitoring section 116 measures AC voltages (for example, effective values or maximum values) generated in the neutral point forming lines 165U to 165W and outputs an alarm signal when the potential difference between the terminals becomes lower than a predetermined threshold value. Based on the output of the alarm signal, the alarm indicator 153 is lit and the alarm buzzer 142 is driven to emit sound to draw attention of the driver.

Although the switch section 162b is controlled so that, upon power generation, it is turned off in order to suppress the power generation amount of the wire connection section 160 as described above, even if the operation section 162a is placed into a non-excited state, if the switch section 162b remains short-circuited from an unexpected situation, then the potential differences between the neutral point forming lines 165U, 165V and 165W exhibit zero or a very low value. Accordingly, by detecting such a state as just described under the action of the voltage monitoring section 116 and outputting an alarm signal, attention of the driver can be drawn.

Or, the alarm signal may be supplied to the ignition suppression control section 114 so that the rotational speed N of the engine 40 is restricted stepwise in an interlocking relationship with a predetermined timer. For example, the ignition suppression control section 114 restricts the rotational speed N to 6,500 rpm until a predetermined period of time elapses after the alarm signal is supplied, and then restricts the rotational speed N to 4,500 rpm after another predetermined period of time elapses after then. Thereafter, when a further predetermined period of time elapses, the ignition suppression control section 114 stops the engine 40.

Consequently, the driver can recognize it from a drop of the rotational speed N that some fault occurs, and since sufficient time is available before the engine 40 stops, the driver can perform such a suitable countermeasure process as to stop the vehicle 11 at a suitable place or drive the vehicle 11 to a predetermined maintenance workshop.

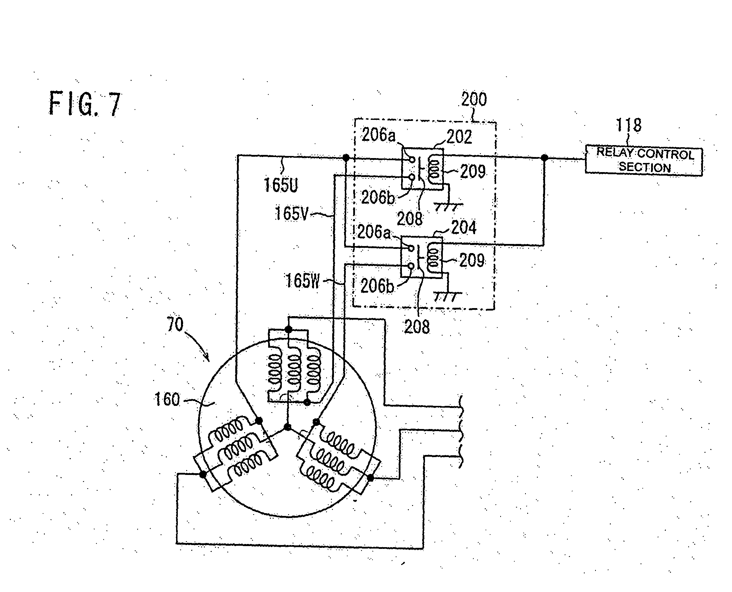

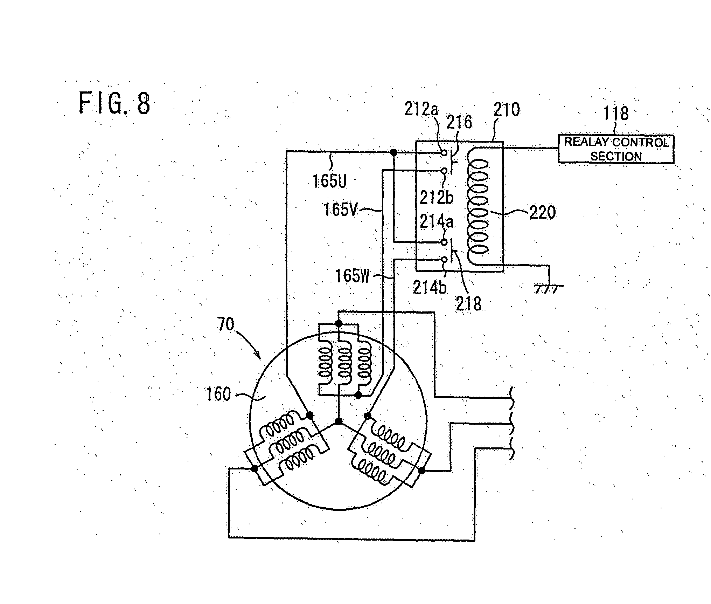

It is to be noted that the relay 162 may be replaced by a relay pair 200 or a relay 210 according to embodiments as shown in FIG. 7 or 8.

As shown in FIG. 7, the relay pair 200 according to the first embodiment includes a first relay (first switch section) 202 and a second relay (second switch section) 204. The first relay 202 and the second relay 204 have the same structure and have a pair of contacts 206a and 206b, a switch section 208 for short-circuiting and disconnecting the contacts 206a and 206b, and an operation section 209 for operating the switch section 208.

The contacts 206a of the first relay 202 and the second relay 204 are connected to the neutral point forming line 165U. The contact 206b of the first relay 202 is connected to the neutral point forming line 165V, and the contact 206b of the second relay 204 is connected to the neutral point forming line 165W. Further, the operation sections 209 are connected in parallel to the relay control section 118, and the first relay 202 and the second relay 204 operate in synchronism with each other while the relay pair 200 functions substantially as a single relay and acts similarly to the relay 162 described hereinabove. The first relay 202 and the second relay 204 may be incorporated in one package.

Since the switch sections 208 of the first relay 202 and the second relay 204 operate in synchronism with each other, they can be controlled through a single signal line simply and conveniently in that there is no necessity to distinguish a control procedure for each relay. Further, since the first relay 202 and the second relay 204 operate in synchronism with each other, the energization state of the stator coils 163a and 163c of each phase is changed over simultaneously and with certainty.

As shown in FIG. 8, the relay 210 according to the second embodiment includes two pairs of contacts 212a, 212b and 214a, 214b, a first switch section 216 for short-circuiting and disconnecting the contacts 212a and 212b, a second switch section 218 for short-circuiting and disconnecting the contacts 214a and 214b, and a single operation section 220 for causing the first switch section 216 and the second switch section 218 to operate in synchronism with each other. The operation section 220 is energized and controlled by the relay control section 118.

The contacts 212a and 214a are connected to the neutral point forming line 165U. The contact 212b is connected to the neutral point forming line 165V while the contact 214b is connected to the neutral point forming line 165W. By such connection, the relay 210 exhibits action similar to that of the relay 162 described hereinabove.

Further, the relay 210, first relay 202 and second relay 204 are more universal than the relay 162 described hereinabove and are used widely and besides are less expensive.

As described above, with the rotary electric machine system 10 according to the present embodiment, when the ACG starter 70 is used as a motor, all of the stator coils 163a to 163c generate magnetic power to obtain high driving force, and the crankshaft 52 of the engine 40 can be started with certainty. On the other hand, when the ACG starter 70 is used as a generator, the other ends of the two stator coils 163a and 163c for each phase are opened by the relay 162, and consequently, the stator coils 163a and 163c are not used for power generation and the power generation capacity is suppressed. Accordingly, excessively high power can be prevented from being supplied to the load or the battery 97.

Further, since the relay 162 short-circuits and disconnects the place serving as the second neutral point 02 of the wire connection section 160, relays independent of each other for the individual phases are not required but substantially one relay can be used for the relay 162. Therefore, the configuration is simple and convenient.

It is to be noted that, while, in the example described hereinabove, the stator coils 163a to 163c are connected to the relay 162 such that the stator coils 163b from among the stator coils 163a to 163c are connected to the first neutral point O1 and the stator coils 163a and 163c form the second neutral point O2, the ratio between the numbers of coils which are to be connected to the first neutral point O1 and the second neutral point O2 may be suitably set depending upon design conditions.

Further, while, in the present embodiment described above, Relays are used as a contact opening and closing section for a coil, the contact opening and closing section is not limited to this.

The rotary electric system according to the present invention is not limited to the embodiment described hereinabove but can naturally take various configurations without departing from the subject matter of the claims.

### Main reference symbols

10 rotary electric machine system
11 vehicle
40 engine
70 ACG starter (rotary electric machine)
72 outer rotor
74 stator
97 battery
100 ECU
102 full-wave rectification bridge circuit
102b semiconductor switching device
108 starter switch
114 ignition suppression control section
116 voltage monitoring section
153 alarm indicator
160 wire connection section
161a to 161c, 206a, 206b, 212a, 212b, 214a, 214b contact
162, 202, 204, 210 relay
162a, 209, 220 operation section
162b, 208, 216, 218 switch section
163a to 163c stator coil
164U to 164W inputting and outputting section
165U to 165W neutral point forming line
200 relay pair
O1 first neutral point
O2 second neutral point
102: full-wave rectification bridge circuit
104: regulator
106: stop and go control section
110: starting reverse rotation control section
112: stopping suppression control section
114: ignition suppression control section
116: voltage monitoring section
118: relay control section
S1: turn on main switch
S2: short-circuit switch section in response to operation of starter switch
S3: turn off switch section in response to opening of starter switch
S4: start action of voltage monitoring section
118: relay control section

## Claims

1. A rotary electric machine system (10), comprising:
a rotary electric machine (70) including a rotor (72) and a stator (74);
a wire connection section (160) provided on said stator (74) and formed from a plurality of coils (163a, 163b, 163c) provided for each phase (U, V, W) and each having one end connected as an inputting and outputting section (164U to 164W);
a relay (162; 202, 204; 210) configured to short-circuit and disconnect some of said plurality of coils (163a, 163b, 163c) for the individual phases (U, V, W) by opening and closing the coils; and
a control section (118) connected to the inputting and outputting sections (164U to 164W) and an operation section (162a; 209; 220) of said relay (162: 202; 204; 210),
wherein said control section (118) short-circuits contacts (161a to 161c; 206a, 206b; 212a, 212b; 214a, 214b) of said relay (162; 202, 204; 210) and supplies power to the inputting and outputting section (164U to 164W) when said rotor (72) is to be rotated, but disconnects the contacts (161a to 161c; 206a, 206b; 212a, 212b; 214a, 214b) of said relay (162; 202, 204; 210) and supplies power obtained from the inputting and outputting sections (164U to 164W) to a predetermined load or a charging section (97) when power generation is to be performed by rotation of said rotor (72),
and wherein said wire connection section (160) has three phases (U, V, W), **characterized in that**
said relay includes a first switch section (202; 216) and a second switch section (204; 218),
the other end of a predetermined number of the coils (163a to 163c) of the first phase (U) of said wire connection section (160) is connected to one (206a; 212a, 214a) of contacts of said first switch section (202; 216) and said second switch section (204; 218),
the other end of the predetermined number of the coils (163a to 163c) of the second phase (V) of said wire connection section (160) is connected to the other contact (260b; 212b), of said first switch section (202; 216), and
the other end of the predetermined number of the coils (163a to 163c) of the third phase (W) of said wire connection section (160) is connected to the other contact (206b; 214b) of said second switch section (204; 218).

2. The rotary electric machine system according to claim 1,
wherein
said control section (118) operates said first switch section (202; 216) and said second switch section (204; 218) so as to perform short-circuiting and disconnection actions in synchronism with each other.

3. The rotary electric machine system according to claim 1 or 2, wherein
said control section (118) measures voltages at the other ends of the coils (163a to 163c) connected to said relay (202, 204; 210) and outputs a predetermined alarm signal based on a potential difference.

## Patentansprüche

1. Elektrisches Drehmaschinensystem (10), umfassend:
eine elektrische Drehmaschine (70), einschließlich eines Rotors (72) und eines Stators (74);
ein Drahtverbindungsteil (160), das am Stator (74) vorgesehen ist und aus einer Mehrzahl von Spulen (163a, 163b, 163c) gebildet ist, die für jede Phase (U, V, W) vorgesehen sind und wobei jede ein als Eingangs- und Ausgangsteil (164U bis 164W) geschaltetes Ende aufweist;
ein Relais (162; 202, 204; 210), das dazu ausgelegt ist, einige aus dieser Mehrzahl von Spulen (163a, 163b, 163c) für die einzelnen Phasen (U, V, W) durch Öffnen und Schließen der Spulen kurzzuschließen und abzuschalten; und
ein Steuerteil (118), das mit den Eingangs- und Ausgangsteilen (164U bis 164W) und einem Bedienteil (162a; 209; 220) des Relais (162; 202, 204; 210) verbunden ist,
wobei das Steuerteil (118) Kontakte (161a bis 161c; 206a, 206b; 212a, 212b; 214a, 214b) des Relais (162; 202, 204; 210) kurzschließt und dem Eingangs- und Ausgangsteil (164U bis 164W) Strom zuführt, wenn der Rotor (72) gedreht werden soll, jedoch die Kontakte (161a bis 161c; 206a, 206b; 212a, 212b; 214a, 214b) des Relais (162; 202, 204; 210) trennt und einer vorbestimmten Last oder einem Ladeteil (97) von den Eingangs- und Ausgangsteilen (164U bis 164W) erhaltenen Strom zuführt, wenn eine Stromerzeugung durch Drehung des Rotors (72) zu leisten ist,
und wobei das Drahtverbindungsteil (160) drei Phasen (U, V, W) aufweist,
**dadurch gekennzeichnet, dass** das Relay ein erstes Schaltteil (202; 216) und ein zweites Schaltteil (204; 218) umfasst,
das andere Ende einer vorbestimmten Anzahl der Spulen (163a bis 163c) der ersten Phase (U) des Drahtverbindungsteils (160) mit einem (206a; 212a, 214a) der Kontakte des ersten Schaltteils (202; 216) und des zweiten Schaltteils (204; 218) verbunden ist,
das andere Ende der vorbestimmten Anzahl der Spulen (163a bis 163c) der zweiten Phase (V) des Drahtverbindungsteils (160) mit dem anderen Kontakt (260b; 212b) des ersten Schaltteils (202; 216) verbunden ist, und
das andere Ende der vorbestimmten Anzahl der Spulen (163a bis 163c) der dritten Phase (W) des Drahtverbindungsteils (160) mit dem anderen Kontakt (206b; 214b) des zweiten Schaltteils (204; 218) verbunden ist.

2. Elektrisches Drehmaschinensystem gemäß Anspruch 1, wobei
das Steuerteil (118) das erste Schaltteil (202; 216) und das zweiten Schaltteil (204; 218) bedient, um Kurzschließ- und Abschaltaktionen im Gleichlauf miteinander durchzuführen.

3. Elektrisches Drehmaschinensystem gemäß Anspruch 1 oder 2, wobei
das Steuerteil (118) Spannungen an den anderen Enden der mit dem Relais (202, 204; 210) verbundenen Spulen (163a bis 163c) misst und ein vorbestimmtes Alarmsignal auf Basis einer Spannungsdifferenz ausgibt.

## Revendications

1. Système de machine électrique rotative (10), comprenant :
une machine électrique rotative (70) comprenant un rotor (72) et un stator (74) ;
une section de connexion de fils (160) prévue sur ledit stator (74) et formée à partir d'une pluralité de bobines (163a, 163b, 163c) prévues pour chaque phase (U, V, W) et ayant chacune une extrémité connectée comme section d'entrée et de sortie (164U à 164W) ;
un relais (162 ; 202, 204 ; 210) configuré pour court-circuiter et déconnecter certaines desdites bobines (163a, 163b, 163c) pour les phases individuelles (U, V, W) en ouvrant et en fermant les bobines ; et
une section de commande (118) connectée aux sections d'entrée et de sortie (164U à 164W) et une section de fonctionnement (162a ; 209 ; 220) dudit relais (162 ; 202 ; 204 ; 210),
dans lequel ladite section de commande (118) court-circuite des contacts (161a à 161c ; 206a, 206b ; 212a, 212b ; 214a, 214b) dudit relais (162 ; 202 ; 204 ; 210) et fournit du courant à la section d'entrée et de sortie (164U à 164W) quand ledit rotor (72) doit être mis en rotation, mais déconnecte les contacts (161a à 161c ; 206a, 206b ; 212a, 212b ; 214a, 214b) dudit relais (162 ; 202 ; 204 ; 210) et fournit du courant obtenu des sections d'entrée et de sortie (164U à 164W) à une charge prédéterminée ou une section de charge (97) quand une génération d'électricité doit être exécutée par la rotation dudit rotor (72), et dans lequel ladite section de connexion de fils (160) a trois phases (U, V, W),
**caractérisé en ce que** :
ledit relais comprend une première section de commutation (202 ; 216) et une deuxième section de commutation (204 ; 218),
l'autre extrémité d'un nombre prédéterminé des bobines (163a à 163c) de la première phase (U) de ladite section de connexion de fils (160) est connectée à l'un (206a ; 212a, 214a) des contacts de ladite première section de commutation (202 ; 216) et de ladite deuxième section de commutation (204 ; 218),
l'autre extrémité du nombre prédéterminé des bobines (163a à 163c) de la deuxième phase (V) de ladite section de connexion de fils (160) est connectée à l'autre contact (260b ; 212b) de ladite première section de commutation (202 ; 216), et
l'autre extrémité du nombre prédéterminé des bobines (163a à 163c) de la troisième phase (W) de ladite section de connexion de fils (160) est connectée à l'autre contact (206b ; 214b) de ladite deuxième section de commutation (204 ; 218).

2. Système de machine électrique rotative selon la revendication 1,
dans lequel ladite section de commande (118) actionne ladite première section de commutation (202 ; 216) et ladite deuxième section de commutation (204 ; 218) de manière à effectuer des actions de court-circuitage et de déconnexion en synchronisme l'une avec l'autre.

3. Système de machine électrique rotative selon la revendication 1 ou 2, dans lequel ladite section de commande (118) mesure les tensions aux autres extrémités des bobines (163a à 163c) connectées audit relais (202, 204 ; 210) et délivre un signal d'alarme prédéterminé basé sur une différence de potentiel.
